# EUROPEAN PATENT SPECIFICATION

(11) **EP 0 297 611 B1**
(45) Date of publication and mention of the grant of the patent: **15.12.1993**
(21) Application number: 88110576.1
(22) Date of filing: 01.07.1988
(51) Int. Cl.: D06N 7/00

(54) **Fabric lamination of unitary backed hot melt constructed carpet tile**
Durch Laminierung eines Gewebes auf einen einheitlich mit einer Polymerschmelze versehenen Rücken hergestellte Teppichfliese
Dalle de tapis fabriquée par laminage d'une couche de textile renforcée unitairement à l'envers par un polymère en fusion

(30) Priority: 01.07.1987 US 68393
(43) Date of publication of application: 04.01.1989
(73) Proprietor: HERCULES INCORPORATED, Wilmington Delaware 19894 (US)
(72) Inventor: Goss, Raymond Walter, Newark, DE 19711 (US)
(74) Representative: Lederer, Franz, Dr.

(56) References cited:
- CH-A- 516 387
- DE-A- 1 635 724
- GB-A- 2 057 353
- LU-A- 83 960
- US-A- 3 537 946
- US-A- 4 412 877

## Description

This invention relates to carpet tiles in which a functional or primary facing layer is secured by an adhesive layer to a flexible backing layer, and concerns warp-resistence thereof.

Carpet tiles offer a number of economic advantages and conveniences over traditional "broadloom" carpeting. This is particularly true with regard to case of repair or replacement of specific areas that are subject to excessive wear from heavy traffic patterns.

Carpet tiles, however, also have some recognized disadvantages involving production and quality control problems. These often involve relatively high unit costs and unacceptable variations in quality.

For example, a relatively heavy extrusion backing and relatively thick adhesive layer between the backing and the facing are usually relied on to provide adequate weight, flexibility and structural strength. However, production and market considerations limit the choice of facing and backing combinations, and the number of environmentally-acceptable adhesives that can be successfully used to bind carpet facing and backing layers under high speed production conditions is also limited. The most desirable for high speed production conditions are hot melt adhesives.

When conventional hot melt adhesives are used, it is necessary to pre-stretch the primary facing and the backing layers to smooth out wrinkles and obtain an even surface for the application of the adhesive and subsequent mating of the layers. The stretching step causes a number of serious problems, since the primary carpet facing layers and other layers are unlikely to have the same elastic properties as the conventional heavy tile backing, and few adhesive compositions, particularly hot melt adhesives, can assure consistent adhesive shear strength or absence of stress between the respective layers, and avoid damage to the adhesive layers or warpage of the finished tile caused by such stress.

Also, while the conventional heavy extruded PVC tile backing or base layer will provide a substantial amount of lateral strength, such a backing layer often lacks sufficient flexibility to compensate for surface irregularities of a floor or base surface. This can result in cracking and slippage of the tile after installation.

U.S. Patent 4,522,857 of Higgins relates to tufted or bonded carpet tile in which the functional or primary facing layer ("carpet base (12)") consists of loop or cut pile of synthetic yarns embedded in a primary backing material (22), and a latex precoat (24) or hot melt adhesive (36) with fiber glass reinforcement (38) bonded to a thick (.1"-1") high-density polyurethane foam layer (28) and a thinner carrier backing (26) of woven polypropylene. On the external or bottom side of the tile, the foam has a tough integral skin surface (30), which is apparently of the type associated with heat curing techniques known to the blow molding art, and therefore is not comparable in its durability with either a conventional PVC extruded-type carpet tile base layer or a thinner but durable backing or base layer of the type that could be laminated to a complementary additional layer.

In the reference, between the functional or primary facing layer and the foam layer, the middle layer consists of a latex precoat (24) or hot melt adhesive (36), with a glass scrim (18) embedded in an adhesive layer (16) that provides some degree of dimensional stability but obviously does not supply the enough resiliency or bulk, thus necessitating the inclusion of the relatively fragile foam layer (18).

GB-A 2057353 discloses a carpet tile production method as in the preamble of claim 1, using tile backing plates which at the upper surface are combined with different layers including on top the primary facing layer. A similar technique is known from DE-A 1635724. These plates present heavy tile bases which do not easily conform to, or adhere to irregular floor surfaces; and they present difficulty in maintaining production quality, particularly since extruded tile base components do not stretch at the same rate as the facing layer. Particularly, only a limited number of primary carpet facings known in the art are compatible with heavy extruded bases and with environmentally-acceptable adhesives.

There is a need for carpet tile structure in which the conventional heavy extruded PVC tile backing or base layer is replaced by a thinner and more flexible but nevertheless durable backing layer that can be readily laminated to a middle layer by conventional high-speed roll-coating production methods using hot melt adhesives, the laminated combination of middle and backing layers providing the weight, bulk, resiliency, and dimensional stability that conventionally would be supplied by a heavier extruded PVC tile backing layer alone or the relatively fragile foam layer of U.S. Patent 4,522,857.

The above problems can be limited or avoided altogether by utilizing a light, flexible roll-applicable material (i.e. hot melt adhesive) for the tile base, which is deliberately deficient with respect to tile weight, strength, and bulk common to usual extruded tile bases.

According to the invention, a carpet tile having a functional or primary facing layer secured by an adhesive layer to a flexible backing layer which is a laminate of an intermediate layer, the laminating adhesive layer and a flexible base layer, the intermediate layer containing compressible elements providing bulk and resilience sufficient to absorb normal vertical distortions of the base layer and being secured by the primary adhesive layer to the primary facing layer, is characterized in that the base layer is a layer of hot melt adhesive.

The carpet tile according to the invention and its manufacture are illustrated in the accompanying drawings, in which the relative dimensions of the respective components are only approximated:
Figure 1 is a schematic view of a production line that can be used for high speed preparation of the carpet tile according to the invention;
Figure 2 is a schematic view of a part of the production line of Figure 1;
Figure 3 is a partial schematic sectional view of a carpet tile according to the invention;
Figure 4 is a partial schematic sectional view of a modified form of the carpet tile of Figure 3.

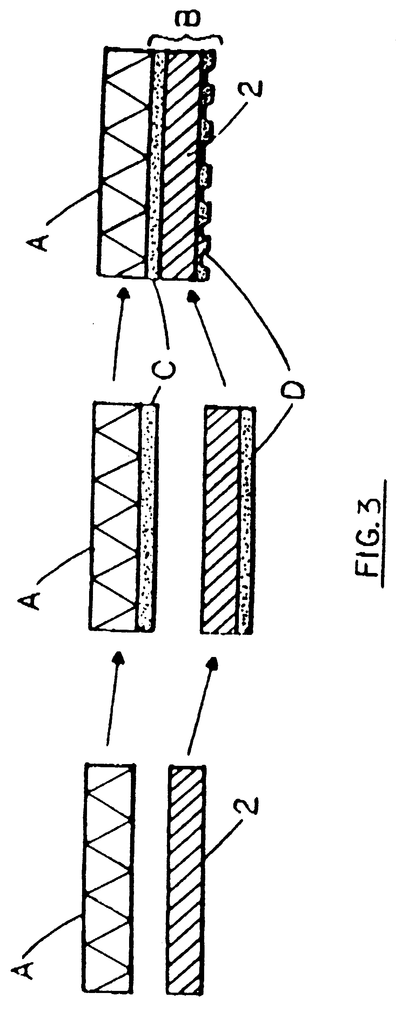

With reference to Figure 3, (A) represents a primary facing layer, which comprises a woven or nonwoven fabric,such as of wool, nylon, polyester, polyolefin or similar fiber materials, or a fibrillated film conventionally used for the purpose, any of which may be in the conventional tufted or nontufted forms. It can include supplemental reinforcing material such as fiberglass. This primary facing component (A) conventionally weighs about 678 to 1627 g/m² (20-48 oz/yd²) and has virtually no cross-directional (CD) or other structural strength. It therefore provides decoration, texture and some bulk, but relatively little tile weight and virtually no dimensional stability or structural strength unless supplemented with a reinforcing material.

The primary facing layer (A) is conventionally precoated with a latex or resin anchoring composition (not shown) precoated in a conventional way by roll, spray or the like to anchor the fiber materials. Such anchoring compositions may be hydrocarbon resins such as Piccovar CB-48 (obtainable from Hercules Incorporated), or carboxylated SBR (styrene-butadiene rubber) compositions.

A flexible backing laminate (B) comprises an adhesive layer (C), an intermediate layer (2) and a flexible base layer (D), the latter layer consisting of a hot melt adhesive.

The intermediate layer (2), which forms part of the flexible backing laminate (B), preferably comprises, for instance, styrofoam balls or fines, or waste pieces of nylon, encapsulated by or sandwiched between polyolefin film, or alternatively multiple layers of fibrillated films or woven or nonwoven fabrics or a layer of scrim embedded in adhesive. It can vary in thickness upwards from about 0.08 mm (3 mil), preferably from 0.64 mm (25 mil), to any thickness desired on the basis of application requirements and cost. Preferably it should weigh at least but 33.9 g/m² (1 oz/yd²) e.g. 67.8 g/m² (2 oz/yd²) preferably to 678 g/m² (20 oz/yd²). These parameters are to be selected in light of the need to compensate to a substantial degree for vertical irregularities in floor or base surfaces covered by the tile and other well known requirements.

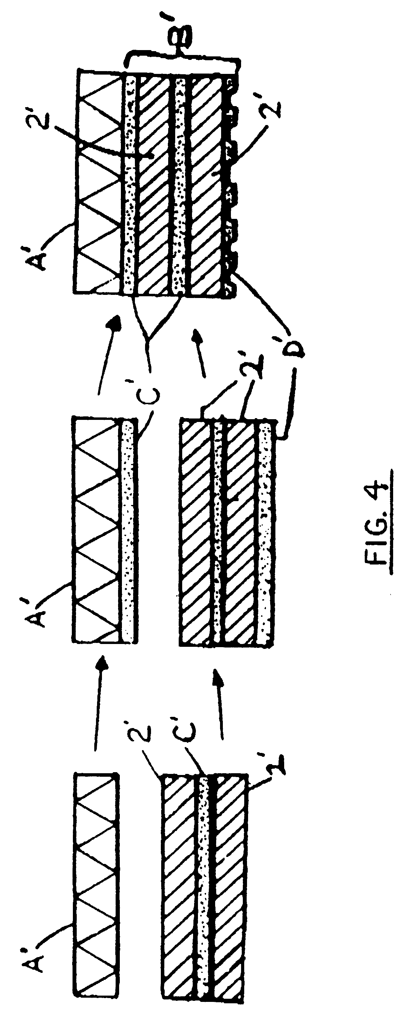

With reference to Figure 4, (in which each element is indicated by the same reference character as in Figure 3 with an added apostrophe), the intermediate layer incorporates two layers (2', 2') bonded to each other and to the facing layer with adhesive layers (C') to form with the flexible base layer (D') a composite backing laminate (B'). Additional layers may be incorporated similarly into the composite backing laminate.

Such augmented base layer can conveniently vary in weight from about 1356 - 2712 g/m² (40 - 80 oz/yd²) or less, provided the combined layer supplies sufficient flexibility to the tile.

With reference to Figures 3 and 4, the flexible base layer (D) or (D') of hot melt adhesive, according to the invention preferably is applied conventionally.

Preferably the flexible base layer (D) or (D') should weigh about 1357 to 3392 g/m² (40-100 oz/yd²), and be about 0.635 mm to 2.0 mm (25-80 mil) thick. With a backing layer of this weight and thickness, the intermediate layer (2) and the primary and secondary adhesive layers (C) or (C') and (D) and (D') together can provide sufficient weight, bulk, resiliency and dimensional stability, as well as durability at least equivalent to that provided by the heavy backing of conventional tiles, and requires less production-time at lower cost.

Preferably, the overall weight and thickness of the backing laminate (B) or (B') (including the primary adhesive layer (C) or (C'), the intermediate layer (2) or (2'), and the secondary adhesive layer or base (D) or (D')), can vary at least from about 0.76 mm to 4.6 mm (30-180 mil) and weigh 4071 g/m² (120 oz/yd²) or more, having in mind the requirements noted above, with the thickness of the primary adhesive layer being from about 0.51 mm to 7.6 (20-300 mil).

With further reference to Figures 3 and 4, the primary adhesive layer (C) or (C'), which bonds the intermediate layer to the primary facing layer (A) or (A') and the secondary adhesive layer (D) or (D') (which as indicated above, is the base layer) are preferably environmentally acceptable hot melt adhesives and provide a substantial amount of lateral flexibility and shear resistance in the carpet tile according to the invention.

Conventional hot melt adhesives suitable for the primary and secondary adhesive layers include ethylene-vinylacetate copolymers and aliphatic and aromatic hydrocarbon resins (obtainable commercially from Hercules Incorporated under the trademarks Piccovar^{R} CB-20, Hercotoc^{R} AD, Piccopale^{R}, Picco^{R} 5000, and Picco^{R} 6000 ). As a matter of convenience, the primary and secondary adhesive layers (C,C',D,D') may comprise identical or similar compositions, as may be convenient.

An advantage of the carpet tile according to the invention is its avoidance of dependence upon the choice and amount of primary and secondary adhesive layers to provide the desired combination of properties, providing a broad choice of adhesives and facing and backing combinations that are compatible with high speed production conditions.

Also according to the invention, a continuous production-line method for making a carpet tile as claimed in any of the preceeding claims, the carpet tile comprising a primary facing layer and a flexible backing layer which includes an intermediate layer having an upper face for bonding to the primary facing layer and a lower face for bonding to a base layer, wherein a hot melt adhesive is roller-coated onto the inner face of the primary facing layer and the roller coated primary facing layer and the intermediate layer are passed together over a cooled mating roll in bonding contact between the adhesive-coated face of the primary facing layer and the upper uncoated face of the intermediate layer and then over a cooling table prior to being cut into tiles, is characterized in that the backing layer is prepared by coating a hot-melt adhesive onto the lower face of the intermediate layer and the adhesive on the lower face of the intermediate layer is passed over part of the circumference of the mating roll for whole or partial setting of the adhesive prior to the bonding of the coated primary facing layer with the intermediate layer.

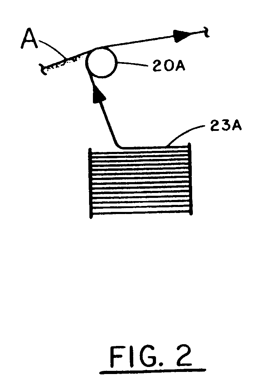

The backing laminate (B) is preferably preformed in situ, with the secondary adhesive or base layer (D) partly set up before marriage with the primary facing layer. Alternatively, it may be separately prepared and introduced from a storage roll, as shown in Figure 2.

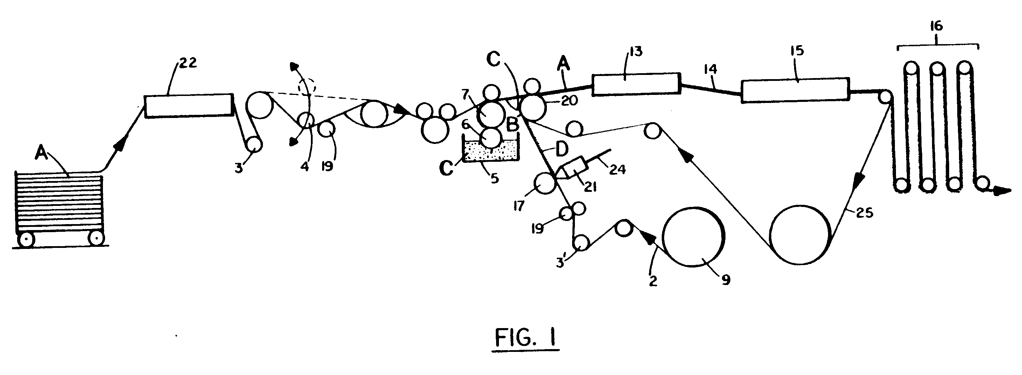

More specifically, with reference to the production line shown in Figure 1, the primary facing layer (A) is fed through a tentering frame (22) and a predetermined amount of tension is applied to minimize wrinkles and surface irregularities by passing through tension and guide rolls (3) (4) and (19) equipped with an appropriate by-pass roll arrangement (4).

The primary facing layer (A) is then passed through a primary adhesive applicator comprising an adhesive wall (5) containing adhesive (C) and pick-up and application rolls (6) (7), to apply adhesive onto the inner face of facing layer (A) at a point just upstream of the locus of contact with the backing laminate (B). The latter comprises the flexible base layer D and the intermediate layer (2), which is fed from a feed roll (9) (or a comparable box or bin, not shown) and has an upper face for bonding to the facing layer and a lower face; both the base layer and intermediate layers are prestretched by use of tension rolls (e.g. 3'). The hot-melt adhesive constituting the base layer D is applied to the lower face of the intermediate layer (2) by use of a slot die (21) fed from a feed line (24). The conventional source of this secondary adhesive (and heating means as hot melt adhesive is used) are not shown.

A continuous embossing belt (25) contacts the hot adhesive base/intermediate layer combination at a cooled conventional marriage or mating roll (20).

The adhesive-treated intermediate layer (2) is then passed over a first part of the roll (20) for the desired degree of setting of the adhesive. The intermediate layer (2) could be replaced by a combination of layers (2') and adhesive (C') as shown on Figure 4, this combination being also fed from the feed roll (9). Then the adhesive-treated intermediate layer (2) is passed over a second part of the mating roll (20) with its upper uncoated face in bonding contact with the adhesive-coated face of the primary facing layer. The circumference, temperature and speed of rotation of mating roll (20) are convenient to imprint the base, to determine the amount of cooling or set-up of secondary adhesive that occurs prior to combination with the primary facing layer and to set-up applied adhesive layers D and C prior to release of tension of the uncut tile.

If desired, mating roll (20) can also be replaced with multiple cooling rolls to more closely approximate the functional situation in which backing laminate (B) is introduced as a unit.

The combined primary facing layer (A) and backing laminate (B) are then passed, in register, over cooling table (13), and the resulting uncut tile material (14) and continuous embossing belt (25) passed over tentering frame (15), and the tile passed to accumulator (16) prior to cutting (not shown).

Figure 2 demonstrates a further modification of Figure 1, in which the backing laminate (B), (shown in the Figure as 23A), is preformed, stored, and fed as needed over roll (20A). Such arrangement, while somewhat more expensive than the process of Figure I, substantially limits the amount of internal shear force that must be absorbed by adhesive layers or otherwise adjusted within the production line.

## Claims

1. A carpet tile having a functional or primary facing layer (A) secured by an adhesive layer (C) to a flexible backing layer (B) which is a laminate of an intermediate layer (2), the laminating adhesive layer (C) and a flexible base layer (D), the intermediate layer (2) containing compressible elements providing bulk and resilience sufficient to absorb normal vertical distortions of the base layer and being secured by the primary adhesive layer (C) to the primary facing layer (A), characterized in that the base layer (D) is a layer of hot melt adhesive.

2. Carpet tile as claimed in claim 1, characterized in that the intermediate layer (2) contains air spaces or cells.

3. Carpet tile as claimed in claim 2, characterized in that the intermediate layer (2) contains particulate styrofoam or nylon, encapsulated by or sandwiched between polyolefin film.

4. Carpet tile as claimed in claim 2, characterized in that the intermediate layer (2) contains one or more layers of fibrillated film, woven or nonwoven fabrics, or scrim embedded in adhesive.

5. Carpet tile as claimed in one of the preceeding claims 1 to 4, characterized in that the intermediate layer (2) is at least 0.64 mm thick and weighs at least about 678 g/m².

6. Carpet tile as claimed in one of the preceeding claims 1 to 5, further characterized in that the intermediate layer (2') may incorporate at least two layers bonded together with adhesive (C').

7. Carpet tile as claimed in one of the preceeding claims 1 to 6, characterized in that the flexible base layer (D) is about 0.635 mm to 2.0 mm thick and weighs 1357 to 3392 g/m².

8. Carpet tile as claimed in one of the preceeding claims 1 to 7, characterized in that the backing layer (B) is at least about 4.6 mm thick and weighs at least 4071 g/m².

9. Carpet tile as claimed in any of the preceeding claims 1 to 8, characterized in that the laminating adhesive layer (C) is from about 0.51 mm to 7.6 mm thick.

10. Carpet tile as claimed in any of the preceeding claims 1 to 9, characterized in that the laminating adhesive layer (C) is a hot melt adhesive.

11. A continuous production-line method for making a carpet tile as claimed in any of the preceeding claims, the carpet tile comprising a primary facing layer (A) and a flexible backing layer (B) which includes an intermediate layer (2) having an upper face for bonding to the primary facing layer (A) and a lower face for bonding to a base layer (D), wherein a hot melt adhesive (C) is roller-coated onto the inner face of the primary facing layer (A) and the roller coated primary facing layer (A) and the intermediate layer (2) are passed together over a cooled mating roll (20) in bonding contact between the adhesive-coated face of the primary facing layer (A) and the upper uncoated face of the intermediate layer (2) and then over a cooling table (13) prior to being cut into tiles, characterized in that the backing layer (B) is prepared by coating a hot-melt adhesive (D) onto the lower face of the intermediate layer (2) and the adhesive (D) on the lower face of the intermediate layer (2) is passed over part of the circumference of the mating roll (20) for whole or partial setting of the adhesive prior to the bonding of the coated primary facing layer (A) with the intermediate layer (2).

12. A continuous production-line method for making a carpet tile as claimed in claim 11, further characterized in that the primary facing layer (A), on its way to the mating roll (20), is subjected to tensioning by being passed through tension rolls (3, 4, 19).

## Patentansprüche

1. Teppichfliese, welche eine funktionelle oder primäre Deckschicht (A) aufweist, welche durch eine Klebstoffschicht (C) an einem flexiblen Rücken (B) befestigt ist, der ein Laminat aus einer Zwischenschicht (2), der laminierenden Klebstoffschicht (C) und einer flexiblen Grundschicht (D) ist, wobei die Zwischenschicht (2) zusammendrückbare Elemente enthält, welche ein zum Absorbieren normaler vertikaler Verwerfungen der Grundschicht ausreichendes Volumen und eine ausreichende Elastizität ergeben, und durch die primäre Klebstoffschicht (C) an der primären Deckschicht (A) befestigt ist, dadurch gekennzeichnet, daß die Grundschicht (D) eine Lage aus Heißschmelzkleber ist.

2. Teppichfliese nach Anspruch 1, dadurch gekennzeichnet, daß die Zwischenschicht (2) Lufträume oder Zellen enthält.

3. Teppichfliese nach Anspruch 2, dadurch gekennzeichnet, daß die Zwischenschicht (2) teilchenförmigen Polystyrolschaum oder Nylon enthält, welches in einem Polyolefinfilm eingekapselt oder zwischen Polyolefinfilme eingelegt ist.

4. Teppichfliese nach Anspruch 2, dadurch gekennzeichnet, daß die Zwischenschicht (2) eine oder mehrere Lagen aus in Klebstoff eingebettetem fibrilliertem Film, in Klebstoff eingebetteten Webstoffen oder Faservliesstoffen oder in Klebstoff eingebettetem, leichtem Leinen- oder Baumwollstoff enthält.

5. Teppichfliese nach einem der Ansprüche 1 bis 4, dadurch gekennzeichnet, daß die Zwischenschicht (2) wenigstens 0,64 mm stark ist und wenigstens etwa 678 g/m² wiegt.

6. Teppichfliese nach einem der Ansprüche 1 bis 5, dadurch gekennzeichnet, daß die Zwischenschicht (2') wenigstens zwei, mit Klebstoff (C') aneinander gebundene Lagen aufweisen kann.

7. Teppichfliese nach einem der Ansprüche 1 bis 6, dadurch gekennzeichnet, daß die flexible Grundschicht (D) etwa 0,635 mm bis 2,0 mm stark ist und 1357 bis 3392 g/m² wiegt.

8. Teppichfliese nach einem der Ansprüche 1 bis 7, dadurch gekennzeichnet, daß der Rücken (B) wenigstens etwa 4,6 mm stark ist und wenigstens 4071 g/m² wiegt.

9. Teppichfliese nach einem der Ansprüche 1 bis 8, dadurch gekennzeichnet, daß die laminierende Klebstoffschicht (C) etwa 0,51 mm bis 7,6 mm stark ist.

10. Teppichfliese nach einem der Ansprüche 1 bis 9, dadurch gekennzeichnet, daß die laminierende Klebstoffschicht (C) ein Heißschmelzkleber ist.

11. Verfahren zur Herstellung einer Teppichfliese nach einem der vorhergehenden Ansprüche auf einer kontinuierlichen Fertigungsstraße, welche Teppichfliese eine primäre Deckschicht (A) und einen flexiblen Rücken (B) umfaßt, der eine Zwischenschicht (2) mit einer Oberseite zum Binden an die primäre Deckschicht (A) und mit einer Unterseite zum Binden an eine Grundschicht (D) aufweist, bei welchem Verfahren ein Heißschmelzkleber (C) durch Walzenbeschichten auf die Innenseite der primären Deckschicht (A) aufgebracht wird, und bei welchem die walzenbeschichtete primäre Deckschicht (A) und die Zwischenschicht (2) gemeinsam über eine gekühlte Zusammenführungswalze (20) - in Bindungskontakt zwischen der mit Klebstoff überzogenen Seite der primären Deckschicht (A) und der oberen, unbeschichteten Seite der Zwischenschicht (2) - und dann über einen Kühltisch (13) geführt werden, bevor sie zu Fliesen zerschnitten werden, dadurch gekennzeichnet, daß der Rücken (B) dadurch hergestellt wird, daß man einen Heißschmelzkleber (D) als Überzug auf die Unterseite der Zwischenschicht (2) aufbringt, und daß der Klebstoff (D) auf der Unterseite der Zwischenschicht (2) über einen Teil des Umfanges der Zusammenführungswalze (20) geführt wird, um den Klebstoff ganz oder teilweise verfestigen zu lassen, bevor man die überzogene, primäre Deckschicht (A) mit der Zwischenschicht (2) verbindet.

12. Verfahren zur Herstellung einer Teppichfliese auf einer kontinuierlichen Fertigungsstraße nach Anspruch 11, dadurch gekennzeichnet, daß die primäre Deckschicht (A) auf ihrem Weg zur Zusammenführungswalze (20) dadurch einem Spannen unterworfen wird, daß man sie durch Spannwalzen (3, 4, 19) führt.

## Revendications

1. Dalle de tapis ayant une couche extérieure fonctionnelle ou primaire (A) fixée par une couche adhésive (C) à une couche de support souple (B) qui est un stratifié d'une couche intermédiaire (2), de la couche adhésive de stratification (C) et d'une couche de base souple (D), la couche intermédiaire (2) contenant des éléments compressibles fournissant un volume et une résilience suffisants pour absorber les déformations verticales normales de la couche de base et étant fixée par la couche adhésive primaire (C) à la couche extérieure primaire (A), caractérisée en ce que la couche de base (D) est une couche d'adhésif thermofusible.

2. Dalle de tapis selon la revendication 1, caractérisée en ce que la couche intermédiaire (2) contient des espaces ou alvéoles d'air.

3. Dalle de tapis selon la revendication 2, caractérisée en ce que la couche intermédiaire (2) contient de la mousse de polystyrène ou du nylon particulaire, encapsulé ou pris en sandwich dans un film de polyoléfine.

4. Dalle de tapis selon la revendication 2, caractérisé en ce que la couche intermédiaire (2) contient une ou plusieurs couches de film fibrillé, de tissus tissés ou non tissés, ou de canevas inclus dans un adhésif.

5. Dalle de tapis selon l'une des revendications 1 à 4 précédentes, caractérisée en ce que la couche intermédiaire (2) a une épaisseur d'au moins 0,64 mm et pèse au moins 678 g/m².

6. Dalle de tapis selon l'une des revendications 1 à 5 précédentes, caractérisée en outre en ce que la couche intermédiaire (2') peut comporter au moins deux couches liées entre elles par de l'adhésif (C').

7. Dalle de tapis selon l'une des revendications 1 à 6 précédentes, caractérisée en ce que la couche de base souple (D) a une épaisseur d'environ 0,635 mm à 2 mm et pèse 1357 à 3392 g/cm².

8. Dalle de tapis selon l'une des revendications 1 à 7 précédentes, caractérisée en ce que la couche de support (B) a une épaisseur d'au moins 4,6 mm et pèse au moins 4071 g/m².

9. Dalle de tapis selon l'une quelconque des revendications 1 à 8 précédentes, caractérisée en ce que la couche adhésive de stratification (C) a une épaisseur d'au moins 0,51 mm à 7,6 mm.

10. Dalle de tapis selon l'une quelconque des revendications 1 à 9 précédentes, caractérisée en ce que la couche adhésive de stratification (C) est un adhésif thermofusible.

11. Procédé de production en chaîne en continu pour fabriquer une dalle de tapis selon l'une quelconque des revendications précédentes, la dalle de tapis comprenant une couche extérieure primaire (A) et une couche de support souple (B) qui comprend une couche intermédiaire (2) ayant une face supérieure pour la liaison à la couche extérieure primaire (A) et une face inférieure pour la liaison à une couche de base (D), dans lequel on enduit au rouleau un adhésif thermofusible (C) sur la face interne de la couche extérieure primaire (A) et on fait passer ensemble la couche extérieure primaire (A) enduite au rouleau et la couche intermédiaire (2) sur un rouleau assembleur refroidi (20) en contact de liaison entre la face revêtue d'adhésif de la couche externe primaire (A) et la face supérieure non revêtue de la couche intermédiaire (2), puis sur une table de refroidissement (13) avant la découpe en dalles, caractérisé en ce qu'on prépare la couche de support (B) en appliquant un adhésif thermofusible (D) sur la face inférieure de la couche intermédiaire (2) et on fait passer l'adhésif (D) sur la face inférieure de la couche intermédiaire (2) sur une partie de la circonférence du rouleau assembleur (20) pour un durcissement total ou partiel de l'adhésif avant la liaison de la couche extérieure primaire enduite (A) avec la couche intermédiaire (2).

12. Procédé de production en chaîne en continu pour fabriquer une dalle de tapis selon la revendication 11, caractérisé en outre en ce que la couche extérieure primaire (A), sur son trajet vers le rouleau assembleur conjugué (20), est soumise à une tension par passage à travers des rouleaux de tension (3, 4, 19).
